# FASCICULE DE BREVET EUROPEEN

(11) **EP 0 403 338 B1**
(45) Date de publication et mention de la délivrance du brevet: **29.12.1993**
(21) Numéro de dépôt: 90401564.1
(22) Date de dépôt: 08.06.1990
(51) Int. Cl.: F16F 15/12, F16F 15/16

(54) **Dispositif amortisseur de torsion à moyens élastiques périphériques disposés dans un boitier étanche, notamment pour véhicule automile**
Torsionsschwingungsdämpfer, bei dem in einem Umkreis elastische Mittel in einem dichten Gehäuse angeordnet sind, insbesondere für Kraftfahrzeuge
Torsional vibration damper with circumferentially arranged elastic means in a leak-proof casing, especially for motor vehicles

(30) Priorité: 12.06.1989 FR 8907736
(43) Date de publication de la demande: 19.12.1990
(73) Titulaire: VALEO, 75848 Paris Cédex 17 (FR)
(72) Inventeur: Bochot, Jean-Claude, F-77410 Claye Souilly (FR); Casse, Pierre, F-95120 Ermont (FR)
(74) Mandataire: Gamonal, Didier

(56) Documents cités:
- EP-A- 0 212 041
- DE-A- 3 624 496
- DE-A- 3 624 498
- DE-A- 3 721 706

## Description

La présente invention concerne les dispositifs amortisseurs de torsion, notamment pour véhicules automobiles, du genre comportant un flasque de support, doté, suivant une circonférence, de moyens de fixation, par exemple de simples perçages, par lesquels il est apte à être rapporté sur un premier arbre, par exemple un arbre menant, ou arbre d'entrée, un voile de moyeu destiné à être solidarisé en rotation à un deuxième arbre, par exemple un arbre mené, ou arbre de sortie, et, intervenant entre ce flasque de support et ce voile de moyeu, des moyens élastiques périphériques.

Un dispositif amortisseur de torsion de ce type se trouve notamment représenté dans le document EP-A-0073286.

Les moyens élastiques périphériques y interviennent à sec.

Compte tenu de leurs déplacements radiaux sous les effets de la force centrifuge, d'une part, et de leurs déplacements relatifs vis-à-vis des rondelles, dites de guidage, qui les encadrent, d'autre part, il est souhaitable, au moins pour certaines applications, d'en assurer une certaine lubrification.

Dans le document FR-A-2627566 qui divulgue les caractéristiques du préambule de la revendication 1, la demanderesse a envisagé, pour ce faire, de disposer ces moyens élastiques périphériques dans un boîtier annulaire étanche en deux parties, qui est solidaire du flasque de support, et qui contient du fluide de lubrification. Ce boîtier porte et renferme un amortisseur de torsion comportant les moyens élastiques périphériques, le voile de moyeu et les deux rondelles de guidage. Les deux parties du boîtier sont fixées l'une à l'autre radialement au-delà desdits moyens élastiques grâce à des moyens d'assemblage. En outre, l'amortisseur de torsion est fixé à l'une des parties du boîtier étanche et des rondelles entretoises relient entre elles de manière étanche les deux parties pour passage des moyens de fixation du boîtier au flasque.

Mais dans la réalisation correspondante, le boîtier étanche s'étend radialement en-deça de la circonférence suivant laquelle s'étendent les moyens de fixation du flasque de support.

Il en résulte qu'il faut d'abord fixer ce flasque sur l'arbre menant à équiper, avant de pouvoir y rapporter le boîtier à la faveur desdites entretoises.

Bien que donnant satisfaction, le montage correspondant s'en trouve compliqué d'autant.

En outre, au droit des moyens de fixation du flasque de support, le boîtier étanche ajoute, axialement, son épaisseur à celle de la tête des vis destinées à coopérer avec ces moyens de fixation, au détriment de l'encombrement axial de l'ensemble. De plus, la présence des entretoises complique la fabrication du boîtier.

La présente invention a pour objet un dispositif amortisseur de torsion du genre concerné dans lequel ces inconvénients sont évités.

Ce dispositif amortisseur de torsion est caractérisé en ce que la périphérie interne du boîtier étanche s'étend suivant une circonférence de diamètre supérieur à celui de la circonférence suivant laquelle s'étendent les moyens de fixation du flasque de support, avec, émergeant radialement de manière étanche, à calage axial et à coulissement circonférentiel, dudit boîtier étanche, le voile de moyeu, et en ce qu'au moins l'une des pièces constitutives du boîtier étanche porte des moyens de calage en rotation dudit amortisseur de torsion doté d'une conformation pour coopération avec lesdits moyens de calage en rotation.

Grâce à l'invention, les moyens de fixation sont, au moins initialement, avant ajout d'une éventuelle pièce auxiliaire, libres d'accès, ce qui facilite le montage, et, axialement, la tête des vis destinées à coopérer avec eux s'étend avantageusement dans le volume hors tout du boîtier étanche, au bénéfice de l'encombrement axial de l'ensemble.

En outre, le montage de l'amortisseur de torsion dans son boîtier étanche est simplifié. De plus, les moyens de fixation peuvent être radialement très proches de la périphérie interne du voile de moyeu, ce qui libère intérieurement de la place.

Il a certes été proposé, dans le document DE-A-3515928, un dispositif amortisseur de torsion à boîtier étanche dont la périphérie interne s'étend suivant une circonférence de diamètre supérieur à celui de la circonférence suivant laquelle s'étendent les moyens de fixation du flasque de support correspondant.

Mais, outre que, dans la réalisation correspondante, c'est le voile de moyeu, et non le boîtier étanche, qui est solidarisé au flasque de support, les moyens de fixation de ce flasque de support contribuent à l'assemblage de ce boîtier étanche.

Ainsi, ce boîtier étanche ne constitue pas par lui-même une entité, susceptible d'être manipulée individuellement en tant que telle, et, si désiré, de donner individuellement lieu à de quelconque essais avant montage.

Il n'en est pas de même avec le dispositif amortisseur de torsion suivant l'invention, dans lequel, au contraire, le boîtier étanche constitue avantageusement une telle entité, soit individuellement, soit conjointement avec le flasque de support lorsque, suivant une forme particulière de réalisation, ce flasque de support forme par lui-même l'une des pièces constitutives de ce boîtier étanche.

Les caractéristiques et avantages de l'invention ressortiront d'ailleurs de la description qui va suivre, à titre d'exemple, en référence aux dessins schématiques annexés sur lesquels:
- la figure 1 est une vue partielle en coupe axiale d'un dispositif amortisseur de torsion suivant l'invention;
- les figures 2,3,4 et 5 sont, à échelle inférieure, des vues partielles en coupe axiale analogues à celle de la figure 1 pour diverses variantes de réalisation;
- les figures 5 et 7 sont, à la même échelle que la figure 1, des vues partielles en coupe axiale se rapportant à d'autres variantes de réalisation.

Tel qu'illustré sur ces figures, le dispositif amortisseur de torsion 10 suivant l'invention comporte un flasque de support 11, qui, dans sa zone centrale, est doté, suivant une circonférence de diamètre D1, de moyens de fixation 12, ici de simples perçages, par lesquels il est apte à être rapporté, par des vis 13, à tête 14, sur un premier arbre 15, par exemple un arbre menant, ou arbre d'entrée, et qui porte, ici, à sa périphérie externe, une couronne de démarreur 17.

Il comporte également un voile de moyeu 18, qui est destiné à être solidarisé en rotation à un deuxième arbre, non représenté, par exemple un arbre mené, ou arbre de sortie, et, intervenant entre le flasque de support 11 et le voile de moyeu 18, en étant disposés dans un boîtier annulaire étanche 20 qui, tel que décrit ultérieurement, est solidarisé au flasque de support 11 et qui contient du fluide de lubrification, non représenté sur les figures, et des moyens élastiques périphériques 21.

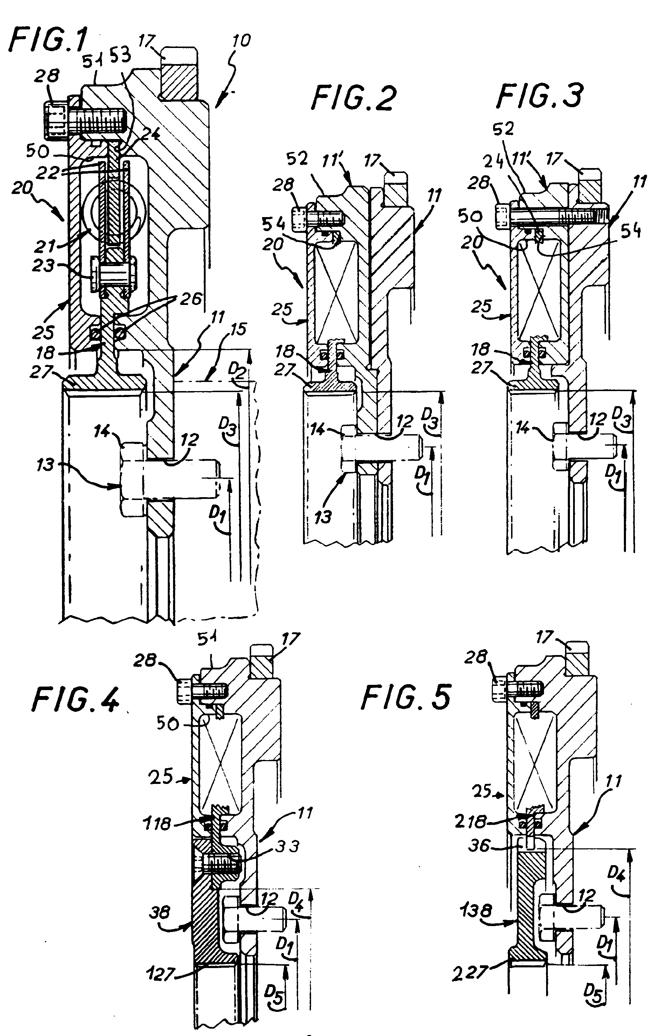

Par mesure de simplicité, le contenu du boîtier étanche 20 a été éliminé sur les figures 2,3,4 et 5.

Ici, les moyens élastiques périphériques 21 interviennent entre, d'une part, deux rondelles 22, dites de guidage, qui sont solidarisées en rotation avec le voile de moyeu 18, ici par des rivets 23, et, d'autre part, un voile d'entraînement 24, qui, intermédiaire entre les rondelles de guidage 22, est solidarisé en rotation, tel que décrit ultérieurement, avec le flasque de support 11.

Ici, le voile 18 présente une surépaisseur 54 pour passage des rivets 23 et centrage des rondelles 22.

Ici, les moyens 21 consistent en une pluralité de ressorts à boudin qui, allongés sensiblement tangentiellement à une même circonférence de l'ensemble, sont logés dans des fenêtres pratiquées en vis-à-vis dans les rondelles de guidage 22 et dans le voile d'entraînement 24 et ces moyens élastiques 21 forment avec le voile 18, les rondelles de guidage 22 et le voile 24 un amortisseur de torsion.

Suivant l'invention, et conjointement, la périphérie interne du boîtier étanche 20 s'étend suivant une circonférence de diamètre D2 supérieur à celui D1 de la circonférence suivant laquelle s'étendent les moyens de fixation 12 du flasque de support 11, avec, émergeant radialement de manière étanche, à calage axial et à coulissement circonférentiel, de ce boîtier étanche 20, en direction de l'axe de l'ensemble, le voile de moyeu 18, les moyens d'assemblage 28 solidarisant entre elles, tel que décrit ultérieurement, les parties constitutives de ce boîtier étanche 20 sont distinctes de ces moyens de fixation 12, et l'une au moins des pièces constitutives du boîtier étanche 20 porte des moyens de calage en rotation 50,32 dudit amortisseur de torsion, doté d'une conformation 24,30 pour coopération avec lesdits moyens de calage en rotation.

Dans les réalisations décrites ci-dessous, l'amortisseur de torsion présente à sa périphérie externe radialement au-delà des moyens élastiques périphériques 21, ladite conformation 24,30.

Ici, le boîtier étanche 20 est constitué de deux pièces annulaires, à savoir, d'une part, une première pièce creuse qui est soit le flasque de support 11 lui-même (figures 1,4,5,6, et 7) auquel cas le flasque de support 11 assure par lui-même la solidarisation à lui du boîtier étanche 20, soit une pièce 11' distincte du flasque de support 11 et adossée à celui-ci (figures 2 et 3) auquel cas, le flasque de support 11 forme une pièce distincte du boîtier étanche 20, et, tel que décrit ultérieurement, ce boîtier étanche 20 est rendu par ailleurs solidaire de ce flasque de support 11, et, d'autre part, une deuxième pièce 25, qui forme couvercle pour la précédente.

On notera que la première pièce creuse 11, 11' est dotée, à sa périphérie extérieure, d'un rebord périphérique respectivement 51,52, d'orientation axiale, formant entretoise.

Le voile 18 émerge à la périphérie interne du boîtier 20 et s'étend entre les pièces 11 ou 11′ et 25 en question, avec, de part et d'autre, s'étendant annulairement autour de l'axe de l'ensemble, en étant logés dans des gorges ménagées à cet effet dans des rebords axiaux dirigés l'un vers l'autre et pratiqués à la périphérie interne de celles-ci, deux joints d'étanchéité 26.

On notera que le voile 18, grâce à sa surépaisseur 54 est précentré par le rebord interne de la pièce concernée 11,11' et qu'il est calé axialement à la périphérie interne du boîtier 20 grâce auxdits rebords.

A la figure 1, et il en est de même sur les figures 2 et 3, le voile de moyeu 18 porte, d'un seul tenant, à sa périphérie interne, un moyeu 27 par lequel il peut être directement calé en rotation sur l'arbre de sortie, et ce moyeu 27 s'étend lui-même suivant une circonférence de diamètre D3 supérieur à celui D1 de la circonférence suivant laquelle s'étendent les moyens de fixation 12.

Il en résulte que ces moyens de fixation 12 sont libres d'accès, ce qui facilite la mise en place des vis 13 et donc le montage de l'ensemble sur l'arbre d'entrée 15.

Ici, les moyens d'assemblage du boîtier étanche 20 sont constitués par des vis 28 intervenant à sa périphérie externe.

Il va de soi, cependant que, en variante, il pourrait tout aussi bien s'agir de goujons, pions ou autres.

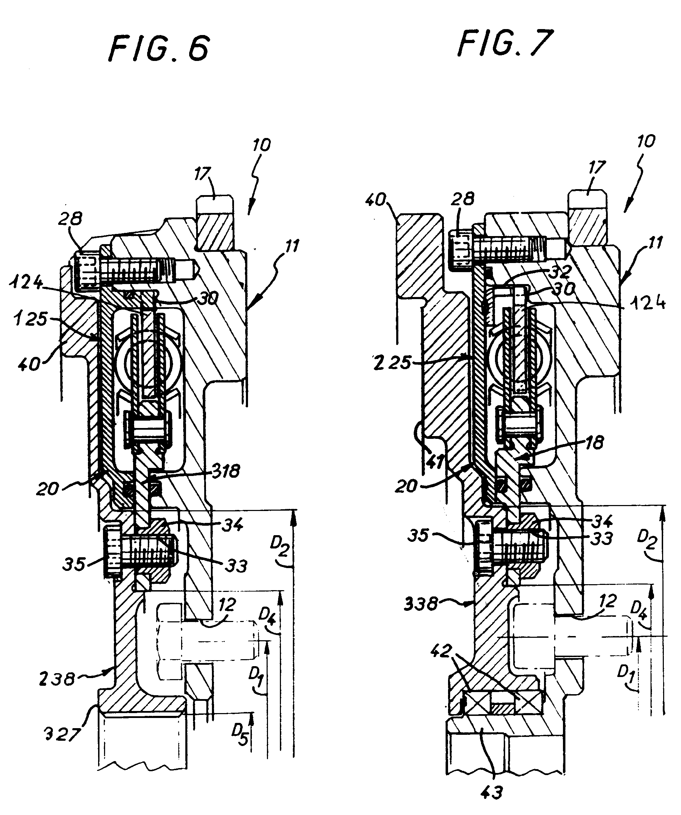

Sur les figures 1,4,5,6 et 7, les vis 28 n'intéressent que la pièce formant couvercle 25 (figure 1), 125 (figure 6), 225 (figure 7) et le flasque de support 11.

A la figure 2, elles intéressent la pièce formant couvercle 25 et la pièce 11', et celles-ci, dûment prolongée radialement à cet effet, est solidarisée au flasque de support 11 par les vis 13 permettant de rapporter l'ensemble sur l'arbre d'entrée 15, ce qui solidarise conjointement le boîtier étanche 20 à ce flasque de support 11.

A la figure 3, les vis 28 traversent la pièce 11', et elles assurent donc, par elles-mêmes, directement, la solidarisation du boîtier étanche 20 au flasque de support 11.

Dans tous les cas, le voile d'entraînement 24 est lui-même solidarisé en rotation au flasque de support 11 par l'intermédiaire du boîtier étanche 20.

A la figure 1, et il en est de même sur les figures 2,3,4 et 5, cette solidarisation intervient par simple pincement de ce voile d'entraînement 24 entre les deux pièces 11 et 11' et 25 constitutives de ce boîtier étanche 20. A cet effet, le couvercle 25 présente radialement en dessous des vis 28, un rebord axial 50 de centrage venant s'emboîter à étanchéité dans le rebord périphérie extérieur 52 de la pièce 11' (figures 2,3) ou dans le rebord 51 de la pièce 11 (figures 1,4,5).

Les pièces 11,11' présentent respectivement un épaulement 53,54 en sorte que le voile 24 est pincé entre ledit épaulement 53 (figures 2,3), ou 54 (figures 4,5) et l'extrémité libre du rebord 50. Le voile 24 est également centré par le rebord 51,52 de la pièce concernée.

Le couvercle 25 porte donc des moyens de calage en rotation pour l'amortisseur de torsion 24,21, 22, 18 lui-même doté d'une conformation (la périphérie externe du voile 24 s'étendant au-delà des ressorts 21) pour coopération avec lesdits moyens d'entraînement.

A la figure 6, le calage ou la rotation se fait par engrènement avec l'une de ces pièces, en l'espèce la pièce formant couvercle 125, une denture 30, au moins, étant prévue à cet effet entre le couvercle 125 et le voile d'entraînement 124. Ce calage est donc du type tenons-mortaises.

En variante (figure 7), cette denture 30 intervient entre ce voile d'entraînement 124 et une pièce auxiliaire 32 solidaire de la pièce formant couvercle 225. Bien entendu, la denture 30 peut intervenir entre le rebord 51,52 et le voile 24,124.

Sur les figures 4,5,6 et 7, le voile 118 (figure 4), 218 (figure 5), 318 (figures 6 et 7) présente, à sa périphérie interne, des moyens d'entraînement, tels que, par exemple, des moyens de fixation 33, ici de simples perçages, formés soit directement (figure 4), soit sur des noix rapportées 34 (figures 6 et 7) et propres à l'intervention de vis 35, ou des moyens d'engrènement 36, ici une simple denture (figure 5) et, par ces moyens d'entraînement, il peut lui être rapporté, tel que représenté, une pièce auxiliaire 38 (figure 4), 138 (figure 5), 238 (figure 6) et 338 (figure 7), propre à lui permettre d'être indirectement solidarisé en rotation à l'arbre de sortie. Ici, la pièce auxiliaire est évidée pour le passage des têtes 14 des vis 13.

En substitution au moyeu 27 précédent, la périphérie interne du voile de moyeu 18 s'étend alors elle-même suivant une circonférence de diamètre D4 supérieur à celui D1 de la circonférence suivant laquelle s'étendent les moyens de fixation 12 du flasque de support 11.

Comme précédemment, un libre accès est ainsi laissé à ces moyens de fixation 12 avant l'ajout de la pièce auxiliaire, qui peut s'étendre radialement en-dessous des moyens de fixation 12.

A la figure 4, et il en est de même sur les figures 5 et 6, cette pièce auxiliaire 38 (respectivement 138,238) forme, à sa périphérie interne, le moyeu 127 (figure 4), 227 (figure 5), 327 (figure 6) et, si désiré, et tel que représenté, celui-ci peut alors s'étendre suivant une circonférence de diamètre D5 inférieur à celui D1 de la circonférence suivant laquelle s'étendent les moyens de fixation 12 du flasque de support 11.

Il est à remarquer que, sur les figures 4 et 5, la pièce auxiliaire 38,138 est, globalement, toute entière contenue dans le volume hors tout délimité axialement par le boîtier étanche 20.

Aux figures 6 et 7, la pièce auxiliaire 238,338 forme, en outre, annulairement, à sa périphérie externe, en avant du boîtier étanche 20, une masse d'inertie 40.

A la figure 7, elle forme, en outre, radialement en retrait par rapport à la masse d'inertie 40, une surface de réaction 41, pour appui d'un disque de friction.

L'ensemble constitue alors un plateau de réaction du type des plateaux de réaction amortisseurs en deux parties, ou doubles volants amortisseurs de torsion.

Dans un tel cas, c'est par l'intermédiaire d'un tel plateau de réaction que le voile de moyeu 18 est apte à être solidarisé en rotation à l'arbre de sortie.

Ici, des roulements 42 sont interposés entre la pièce auxiliaire 338 et un manchon 43 venu d'un seul tenant du flasque de support 11. Ces roulements 42 sont disposés en-dessous des moyens de fixation 12, ce qui permet de réduire leur taille.

Ainsi qu'il ressort à l'évidence de la description et des dessins, le montage de l'amortisseur de torsion 18,22,21,24 dans son boîtier 20 se fait par simple enfilage avec solidarisation axiale et circonférentielle par fermeture du boîtier à l'aide du couvercle.

Bien entendu, la présente invention ne se limite pas aux formes de réalisation décrites et représentées. En particulier, on peut inverser les structures, par exemple, les rondelles de guidage 22 peuvent être reliées l'une à l'autre par des entretoises et être pincées entre le couvercle 25 et la pièce 11 ou 11', comme dans les figures 1 et 2, le voile 24 étant dans ce cas solidaire du voile de moyeu 18. Il devient également possible, dans cette configuration, d'entraîner en rotation l'une des rondelles par la pièce 11 ou 11' et l'autre par le couvercle 25 à l'aide d'au moins une denture, comme dans les figures 6 et 7.

## Revendications

1. Dispositif amortisseur de torsion, du genre comportant un flasque de support (11), doté, suivant une circonférence, de moyens de fixation (12) par lesquels il est apte à être rapporté sur un premier arbre, un voile de moyeu (18) destiné à être solidarisé en rotation à un deuxième arbre, et, intervenant entre ledit flasque de support (11) et ledit voile de moyeu (18), en étant disposés dans un boîtier annulaire étanche (20) dont les pièces constitutives sont solidarisées entre elles par des moyens d'assemblage (28) distincts de ces moyens de fixation (12) et qui contient du fluide de lubrification, des moyens élastiques périphériques (21), dans lequel le boîtier étanche 20 porte et renferme un amortisseur de torsion (18,22,21,24) comportant les moyens élastiques péripheriques (21) et le voile de moyeu (18), caractérisé en ce que la périphérie interne dudit boîtier étanche (20) s'étend suivant une circonférence de diamètre (D2) supérieur à celui (D1) de la circonférence suivant laquelle s'étendent les moyens de fixation (12) du flasque de support (11), avec, émergeant radialement de manière étanche, à calage axial et à coulissement circonférentiel, dudit boîtier étanche (20), le voile de moyeu (18), et en ce qu'au moins l'une des pièces constitutives du boîtier étanche (20) porte des moyens de calage en rotation (50,32) dudit amortisseur de torsion (18,22,21,24) doté d'une conformation (24,30) pour coopération avec lesdits moyens de calage en rotation.

2. Dispositif amortisseur de torsion suivant la revendication 1, caractérisé en ce que ledit amortisseur de torsion (18,22,21,24) présente, à sa périphérie externe, radialement au-delà des moyens élastiques périphériques (21), une conformation (24, 124) pour coopération avec lesdits moyens de calage en rotation ((50,32).

3. Dispositif amortisseur de torsion suivant la revendication 1 ou 2, caractérisé en ce que les moyens élastiques périphériques (21) intervenant entre, d'une part, deux rondelles (22), appartenant à l'amortisseur de torsion (18,22,21,24), qui sont solidarisées en rotation avec le voile de moyeu 18, et, d'autre part, un voile d'entraînement (24) qui, intermédiaire entre lesdites rondelles (22), est solidarisé en rotation avec le flasque de support (11), ledit voile d'entraînement (24) est solidarisé en rotation aux flasques de support (11) par l'intermédiaire du boîtier étanche (20) par l'un quelconque des moyens suivants:
- pincement entre deux pièces (25,11 ou 11') constitutives de ce boîtier étanche,
- engrènement avec une telle pièce (25,11 ou 11') ou une pièce (32) qui en est solidaire.

4. Dispositif amortisseur de torsion suivant l'une quelconque des revendications précédentes, caractérisé en ce que, le voile de moyeu (18) portant, d'un seul tenant à sa périphérie interne, un moyeu (27) par lequel il peut être directement calé en rotation sur le deuxième arbre, ledit moyeu (27) s'étend lui-même suivant une circonférence de diamètre (D3) supérieur à celui (D1) de la circonférence suivant laquelle s'étendent les moyens de fixation (12) du flasque de support (11).

5. Dispositif amortiseur de torsion suivant l'une quelconque des revendications 1 à 3, caractérisé en ce que le voile de moyeu (18) présentant, à sa périphérie interne, des moyens d'entraînement, tels que moyens de fixation (33) ou moyens d'engrènement (36), par lesquels il peut lui être rapporté une pièce auxiliaire (38) propre à lui permettre d'être indirectement solidarisé en rotation au deuxième arbre, sa dite périphérie interne s'étend elle-même suivant une circonférence de diamètre (D4) supérieur à celui (D1) de la circonférence suivant laquelle s'étendent les moyens de fixation (12) du flasque de support (11).

6. Dispositif amortisseur de torsion suivant la revendication 5, caractérisé en ce que ladite pièce auxiliaire (38) forme un moyeu (27).

7. Dispositif amortisseur de torsion suivant la revendication 5, caractérisé en ce que ladite pièce auxiliaire (38) forme une masse d'inertie (40).

8. Dispositif amortisseur de torsion suivant la revendication 5, caractérisé en ce que ladite pièce auxiliaire (38) forme une surface de réaction (41) en sorte que l'ensemble constitue un plateau de réaction en deux parties.

9. Dispositif amortisseur de torsion suivant l'une quelconque des revendications 1 à 8, caractérisé en ce que le flasque de support (11) forme par lui-même l'une des pièces constitutives du boîtier étanche (20).

10. Dispositif amortisseur de torsion suivant l'une quelconque des revendications 1 à 8, caractérisé en ce que le flasque de support (11) forme une pièce distincte du boîtier étanche (20).

## Claims

1. A torsion damping apparatus, of the kind comprising a support wheel (11), having, on a pitch circle, fastening means (12) through which it is adapted to be carried on a first shaft, a hub plate (18) adapted to be secured to a second shaft for rotation with the latter, and peripheral resilient means (21) acting between the said support wheel (11) and the said hub plate (18) and disposed in a sealed annular housing (20), the component parts of which are secured together by assembly means (28) separate from the said fastening means (12), the said housing containing lubricating fluid, wherein the sealed housing (20) carries and encloses a torsion damper (18, 22, 21, 24) comprising the peripheral resilient means (20) together with the hub plate (18), characterised in that the inner periphery of the said sealed housing (20) extends over a circumference having a diameter (D2) greater than that (D1) of the pitch circle on which the fastening means (12) for the support wheel (11) are disposed, with the hub plate (18) emerging radially in a sealed manner from the said sealed housing (20), with respect to which it is sealed and located axially but able to slide circumferentially, and in that at least one of the component parts of the sealed housing (20) carries means (50, 32) for putting the said torsion damper (18, 22, 21, 24) into rotation, the torsion damper having a conformation (24, 30) for cooperation with the said means for putting the torsion damper into rotation.

2. A torsion damping device according to Claim 1, characterised in that the said torsion damper (18, 22, 21, 24) has at its outer periphery, radially outside the peripheral resilient means (21), a conformation (24, 124) such as to cooperate with the said means (50, 32) for putting the torsion damper into rotation.

3. A torsion damping device according to Claim 1 or Claim 2, characterised in that the peripheral resilient means (21) act between, firstly, two rings (22) of the torsion damper (18, 22, 21, 24), which are secured to the hub plate (18) for rotation with the latter, and secondly, a drive plate (24) which, being intermediate between the said rings (22), is secured through the sealed housing (20) to the support wheel (11), for rotation with the latter, by any one of the following means, the said drive plate (24) being secured to the support wheels (11) for rotation with them:
- gripping between two components (25, 11 or 11') of the said sealed housing,
- meshing with a said component (25, 11 or 11') or a member (32) which is secured to it.

4. A torsion damping device according to any one of the preceding Claims, characterised in that, the hub plate (18) carrying, integrally with its inner periphery, a hub (27) through which it can be directly put into rotation on the second shaft, the said hub (27) itself extends over a circumference having a diameter (D3) greater than that (D1) of the pitch circle on which the fastening means (12) for the support wheel (11) are disposed.

5. A torsion damping device according to any one of Claims 1 to 3, characterised in that the hub plate (18) has at its inner periphery drive means, such as fastening means (33) or meshing means (36), through which there can be attached to it an auxiliary member (38) adapted to enable it to be indirectly coupled in rotation to the said shaft, with its said inner periphery itself extending over a circumference having a diameter (D4) which is greater than that (D1) of the pitch circle on which the fastening means (12) for the support wheel (11) are disposed.

6. A torsion damping device according to Claim 5, characterised in that the said auxiliary member (38) constitutes a hub (27).

7. A torsion damping device according to Claim 5, characterised in that the said auxiliary member (38) constitutes an inertia mass (40).

8. A torsion damping device according to Claim 5, characterised in that the said auxiliary member (38) defines a reaction surface (41) such that the assembly constitutes a reaction plate having two parts.

9. A torsion damping device according to any one of Claims 1 to 8, characterised in that the support wheel (11) forms by itself one of the members constituting the sealed housing (20).

10. A torsion damping device according to any one of Claims 1 to 8, characterised in that the support wheel (11) is a component distinct from the sealed housing (20).

## Patentansprüche

1. Drehschwingungsdämpfer, enthaltend einen Stützflansch (11), der längs eines Kreisumfangs mit Befestigungsmitteln (12) versehen ist, durch die er an einer ersten Welle angebaut werden kann, einen Nabenflansch (18), der zur festen drehbeweglichen Verbindung mit einer zweiten Welle bestimmt ist, und die zwischen dem genannten Stützflansch (11) und dem genannten Nabenflansch (18) eingreifen und in einem dichten ringförmigen Gehäuse (20) angeordnet sind, dessen Bestandteile untereinander fest durch Montagemittel (28) verbunden sind, die von diesen Befestigungsmitteln (12) verschieden sind, und worin Schmierflüssigkeit enthaltend ist, periphere elastische Mittel (21), in denen das dichte Gehäuse (20) ruht und einen Drehschwingungsdämpfer (18, 22, 21, 24) umschließt, der die peripheren elastischen Mittel (21) und den Nabenflansch (18) enthält, **dadurch gekennzeichnet**, daß die Innenperipherie des genannten dichten Gehäuses (20) längs eines Kreisumfangs verläuft, dessen Durchmesser (D2) größer ist als derjenige (D1) des Kreisumfangs, längs dessen die Befestigungsmittel (12) für den Stützflansch (11) verlaufen, und mit dem Nabenflansch (18), der radial abgedichtet und mit axialer Verkeilung und Umfangsgleitbewegung vom genannten dichten Gehäuse (20) ausgeht, und daß wenigstens eines der Bestandteile des dichten Gehäuses (20) Mittel für die drehbewegliche Verkeilung (50, 32) des genannten Drehschwingungsdämpfers (18, 22, 21, 24) trägt, versehen mit einer Konfiguration (24, 30) zum Zusammenwirken mit den genannten drehbeweglichen Verkeilungsmitteln.

2. Drehschwingungsdämpfer nach Anspruch 1, **dadurch gekennzeichnet**, daß der genannte Drehschwingungsdämpfer (18, 22, 21, 24) an seiner Außenperipherie, radial jenseits der peripheren elastischen Mittel (21), eine Konfiguration (24, 124) aufweist, die mit den genannten drehbeweglichen Verkeilungsmitteln (50, 32) zusammenwirkt.

3. Drehschwingungsdämpfer nach Anspruch 1 oder 2, **dadurch gekennzeichnet**, daß die peripheren elastischen Mittel (21) einerseits zwischen zwei Scheiben (22) eingreifen, die zum Drehschwingungsdämpfer (18, 22, 21, 24) gehören und drehbeweglich fest mit dem Nabenflansch (18) verbunden sind, und andererseits einem Antriebsflansch (24), der zwischen den genannten Scheiben (22) liegt und drehbeweglich fest mit dem Stützflansch (11) verbunden ist, wobei der genannte Antriebsflansch (24) über das dichte Gehäuse (20) durch eines der folgenden Mittel drehbeweglich fest mit den Stützflanschen (11) verbunden ist:
- Einklemmung zwischen zwei Teilen (25, 11 oder 11'), die zu diesem dichten Gehäuse gehören,
- Eingriff mit einem solchen Teil (25, 11 oder 11') oder einem damit fest verbundenen Teil (32).

4. Drehschwingungsdämpfer nach einem der vorherigen Ansprüche, **dadurch** **gekenn****zeichnet**, daß der Nabenflansch (18), an der Innenperipherie aus einem Stück damit bestehend, eine Nabe (27) trägt, wodurch er direkt drehbeweglich an der zweiten Welle verkeilt werden kann, während sich die genannte Nabe (27) ihrerseits längs eines Kreisumfangs erstreckt, dessen Durchmesser (D3) größer ist als derjenige (D1) des Kreisumfangs, längs dessen die Befestigungsmittel (12) für den Stützflansch (11) verlaufen.

5. Drehschwingungsdämpfer nach einem der Ansprüche 1 bis 3, **dadurch gekennzeich****net**, daß der Nabenflansch (18) an seiner Innenperipherie Antriebsmittel wie zum Beispiel Befestigungsmittel (33) oder Eingriffsmittel (36) aufweist, durch die daran ein Hilfselement (38) angebaut werden kann, wodurch er indirekt drehbeweglich fest mit, der zweiten Welle verbunden werden kann, und wobei sich die genannte Innenperipherie ihrerseits längs eines Kreisumfangs erstreckt, dessen Durchmesser (D4) größer ist als derjenige (D1) des Kreisumfangs, längs dessen die Befestigungsmittel (12) für den Stützflansch (11) verlaufen.

6. Drehschwingungsdämpfer nach Anspruch 5, **dadurch gekennzeichnet**, daß das genannte Hilfselement (38) eine Nabe (27) bildet.

7. Drehschwingungsdämpfer nach Anspruch 5, **dadurch gekennzeichnet**, daß das genannte Hilfselement (38) eine Schwungmasse (40) bildet.

8. Drehschwingungsdämpfer nach Anspruch 5, **dadurch gekennzeichnet**, daß das genannte Hilfselement (38) eine Reaktionsfläche (41) bildet, so daß das Ganze ein zweiteiliges Schwungrad bildet.

9. Drehschwingungsdämpfer nach einem der Ansprüche 1 bis 8, **dadurch gekennzeichnet**, daß der Stützflansch (11) seinerseits eines der Bestandteile des dichten Gehäuses (20) bildet.

10. Drehschwingungsdämpfer nach einem der Ansprüche 1 bis 8, **dadurch gekennzeich****net**, daß der Stützflansch (11) ein anderes Element bildet als das dichte Gehäuse (20).
